# EUROPEAN PATENT SPECIFICATION

(11) **EP 3 022 846 B1**
(45) Date of publication and mention of the grant of the patent: **23.08.2017**
(21) Application number: 14748286.3
(22) Date of filing: 30.05.2014
(51) Int. Cl.: H04B 1/38, H01Q 1/24

(54) **PROTECTIVE DEVICE FOR EQUIPMENT WHICH EMITS ELECTROMAGNETIC WAVES**
SCHUTZVORRICHTUNG FÜR EIN GERÄT, DAS ELEKTROMAGNETISCHE WELLEN AUSSTRAHLT
DISPOSITIF DE PROTECTION POUR UN APPAREIL ÉMETTANT DES ONDES ÉLECTROMAGNÉTIQUES

(30) Priority: 19.07.2013 IT RN20130028; 15.11.2013 IT RN20130041
(43) Date of publication of application: 25.05.2016
(73) Proprietor: Ariano, Franco, 47841 Cattolica (RN) (IT)
(72) Inventor: Ariano, Franco, 47841 Cattolica (RN) (IT)
(74) Representative: Montebelli, Marco
(86) International application number: PCT/IT2014/000151
(87) International publication number: WO 2015/008307

(56) References cited:
- WO-A2-2013/067390
- US-A1- 2004 094 316
- US-A1- 2009 011 806

## Description

### Technical field

This invention relates to a protective device for equipment which emits electromagnetic waves.

With the considerable development of telecommunication systems in recent decades, there is ever increasing availability of portable equipment free from physical wired connections, substituted by wireless connections for systems for broadcasting and receiving signals carried by radio waves. Thanks to a continuous, unstoppable technological evolution we have passed from the initial cordless and mobile telephone receiver equipment, to the current integrated systems which allow people to communicate, even via the internet, using mobile equipment such as smartphones, tablets and others, with ever smaller limitations on the speed and quantity of data exchangeable.

Such equipment, following increasingly advanced technical performance, but also information and marketing strategies adopted by large manufacturers, has increasingly become attractive, or even taken on cult status, for large groups, particularly young, of the world population. Even parallel market sectors, relating to accessories such as "covers" for such equipment, with shapes, colours, and functions which are appealing and customisable at a low cost, have become of great interest to consumers.

However, in order to achieve those results, it was necessary to increase development of broadband radio wave transmission systems, using increasingly high frequencies, capable of transferring greater quantities of energy in short times.

### Background art

Following that strong development in transmission techniques, recently and particularly in more developed nations, studies and research have been carried out on the possibility that electromagnetic waves can damage the health of people who are repeatedly exposed to considerable levels of them. Unfortunately the results of such research seem to increasingly unequivocally confirm that such damage is an absolute certainty and that the seriousness of it depends greatly on exposure intensity and times for the parts of the human body subjected to them. On this subject, even the Italian Supreme Court of Cassation has ruled, acknowledging the damaging nature of such radiation in ruling No. 17438 of 12.10.2012.

In the prior art, in the specific, but not limiting, sector of mobile telephones, smartphones, tablets and cordless telephones, for some time now there has been widespread use of protective devices for people who use them a lot, mostly based on elements projecting from the outline of the equipment, in such a way as to keep the equipment far enough away from the more exposed and sensitive parts of the body of the user, such as the ear, jaw, mouth, hand.

If such projecting elements are fixed to the mobile or cordless telephone, as in document US2009/0011806, they are not very practical when the equipment is not used, due to their dimensions. In contrast, if they have to be applied, as described in document WO2013/067390, the disadvantages basically derive from the fact that for each type of mobile telephone a specific device is required, which is not always available or easy to find, since it is normally removed from the equipment when not in use. Whatever the case, the use of such devices is quite complex and they are not very attractive.

In particular, there is no current use of devices to protect against electromagnetic waves which are integrated in the "covers" of the equipment. As indicated above, sales of covers are growing solely for aesthetic reasons and to preserve the outer appearance of such equipment.

### Disclosure of the Invention

The aim of this invention is, therefore, to overcome the limitations and eliminate the disadvantages mentioned above.

The invention, as described in the claims, achieves the aim thanks to the use of spacer means which are interposed between the equipment which emits waves and sensitive parts of the body of the user, thereby protecting them from the heat and radiation emitted by the equipment.

The main advantage of this invention is basically the fact that the user always has the protective device available during use of the equipment, being able to keep it constantly constrained to the equipment in question.

Moreover, the invention allows protection against emissions of waves even relative to equipment, such as cordless telephones, to which an earphone cannot be applied.

The various decorative forms which can be given to the device generally make it more attractive and appealing for various groups of users, resulting in more constant and continuous use, with more significant results for health.

Finally, the simple structure and flexibility for adapting to various equipment having various shapes and to the different physical build of people, make the invention inexpensive to produce and spread, presumably with good sales and economic effects on the market.

### Brief description of the drawings

Further advantages and features of the invention are more apparent in the detailed description which follows, with reference to the accompanying drawings, which illustrate an example embodiment of it without limiting the scope of the invention, in which:
- Figure 1 is a perspective view of the invention;
- Figure 2 is a front view of the invention, in an operating condition;
- Figure 3 illustrates the invention during use;
- Figure 4 is a side view of an alternative embodiment of the invention, in an operating condition;
- Figures 5 and 6 illustrate details of the invention;
- Figures 7 and 8 are respectively a front view and a side view of a different embodiment of the invention;
- Figures 9 and 10 are respectively a front view and a side view of an embodiment which does not form part of the invention;
- Figure 11 is a side view of another alternative embodiment of the invention;
- Figures 12 and 13 are respectively a front view and a side view of a further embodiment which does not form part of the invention;
- Figures 14 and 15 are respectively a front view and a side view of a further possible alternative embodiment of the invention;
- Figures 16 and 17 are side views of alternative embodiments of details of the invention;
- Figure 18 illustrates respectively a front, a side and a perspective view of a further embodiment of the invention;
- Figures 19 and 20 are respectively perspective and side views of an alternative embodiment of the invention to the embodiment of Figure 18;
- Figures 21 and 22 are respectively perspective and side views of a second alternative embodiment of the invention to the embodiment of Figure 18.

### Detailed description of preferred embodiments of the Invention

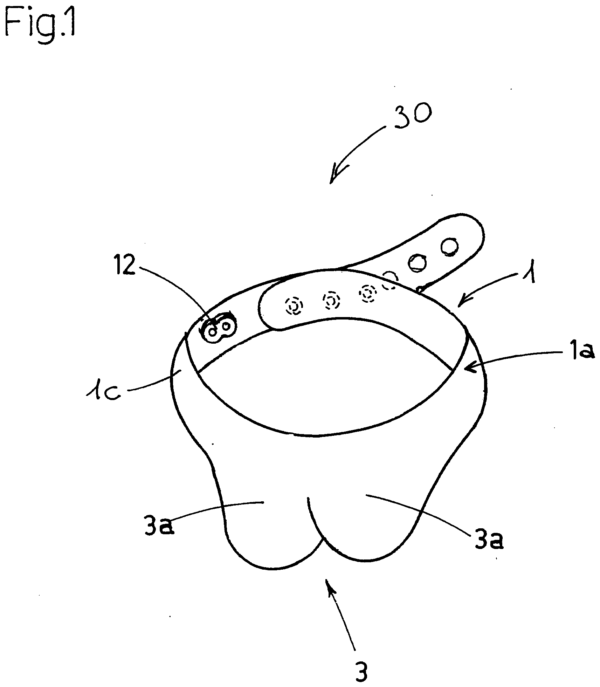

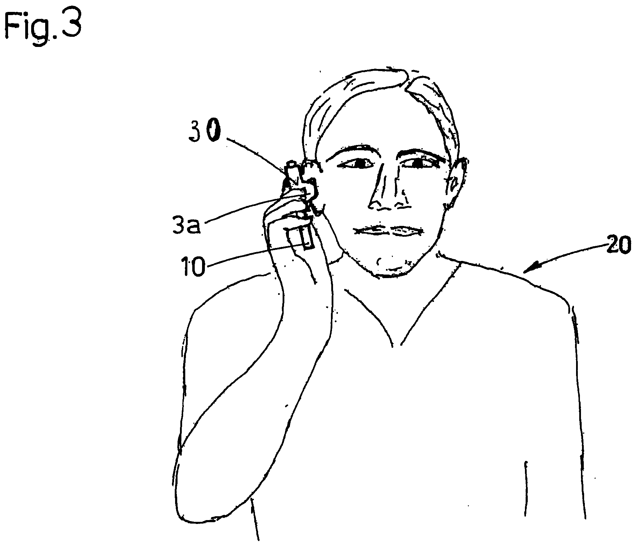

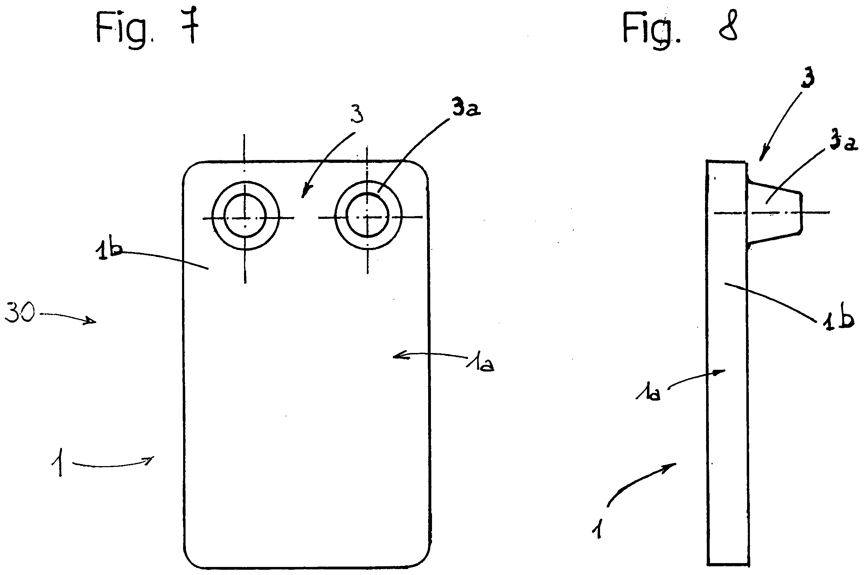

A protective device for equipment which emits electromagnetic waves comprises a main body 1, for example made of silicone material or the like, and spacer means 3, fixed to the main body 1 and suitable for, during use, keeping the equipment 10 away from parts of the body of a user 20. The main body 1 comprises a closed surface 1a, designed to surround the equipment 10 when it is in the operating condition. The closed surface 1a may comprise a plurality of faces 1b, designed to form a polyhedral case of the equipment 10, as shown in Figures 7 to 17, or it may comprise a single face 1c, so as to form a bracelet or band, as shown in Figures 1 to 6.

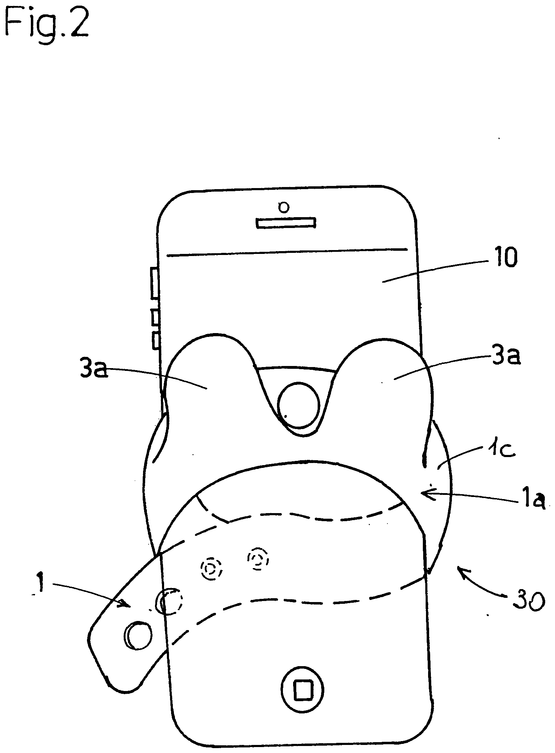

In the former case, the main body 1 is permanently in contact with the equipment 10 and the spacer means 3 are on at least one face 1b of it. In the latter case, the main body 1, in the shape of a bracelet, when not in use, is preferably worn on the wrist of the user 20, so that when the user 20 intends to use it, it can be slid until it surrounds the equipment 10, as illustrated in Figures 2 to 4. The hand supporting the equipment 10 may also be surrounded by the bracelet 1.

The spacer means 3, as shown in Figures 2, 7 and 8, comprise at least one isolating projection 3a, preferably having a rounded shape, designed to reduce the absorption of radiation and heat by the user 20, particularly in the zones of the ear and the jaw.

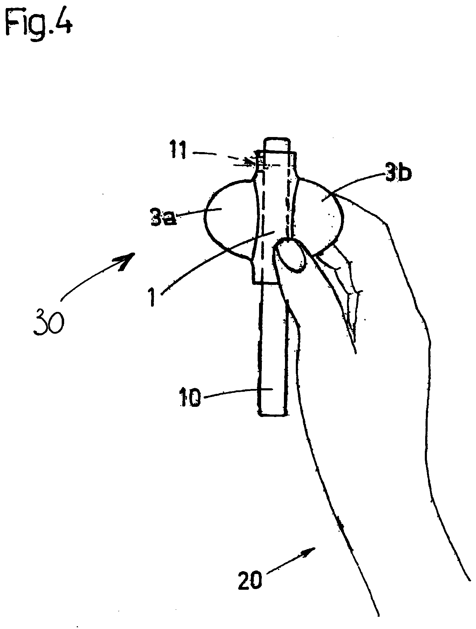

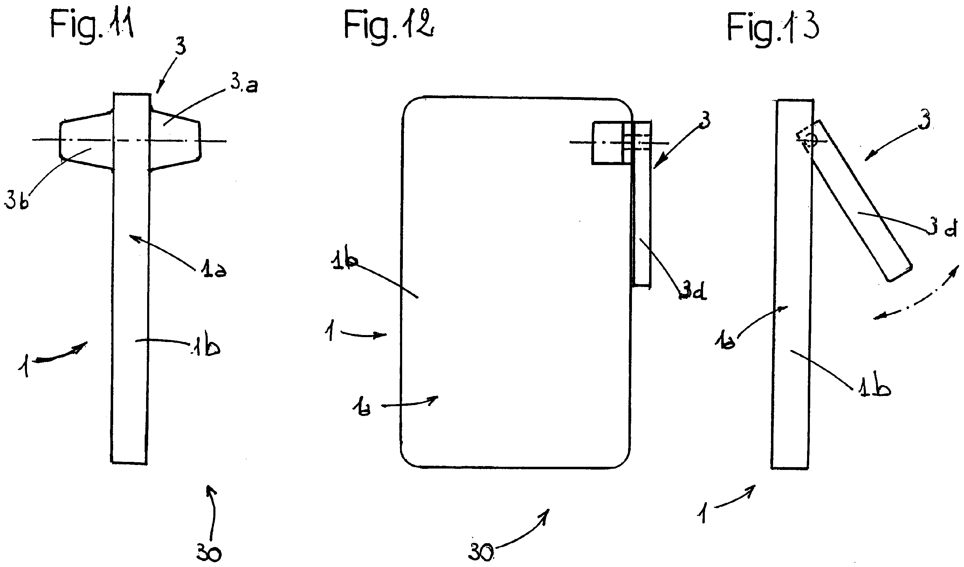

In a possible alternative embodiment of the invention, shown in Figures 4 and 11, the spacer means 3 comprise at least a second isolating projection 3b, opposite the first projection 3a, in such a way that it also reduces the absorption of radiation and heat by the hand supporting the equipment 10, located on the outside of the main body 1 of the protective device 30.

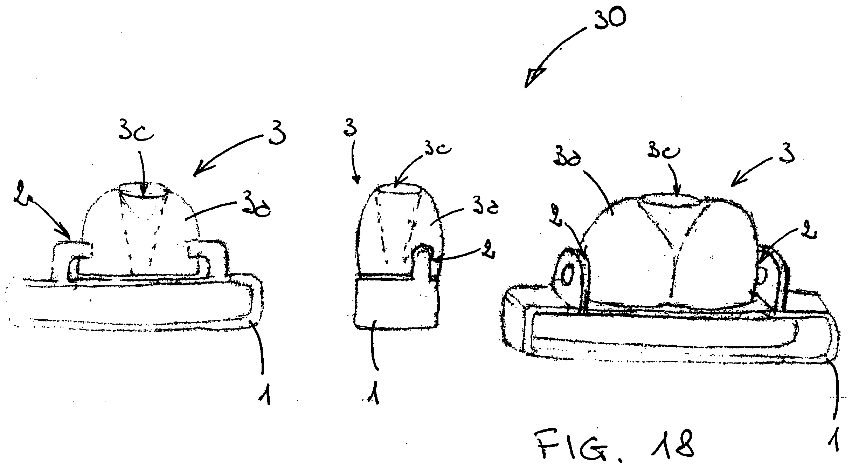

A preferred embodiment of the projections 3a, 3b described above is shown in Figure 18, in which the spacer means 3 have, for example, been associated with a main body 1 in the form of a bracelet. In it, as can be seen, in the central zone of one projection 3a; 3b there is an acoustic cone 3c, its base towards the user 20, for amplifying the sounds received. The same figure also shows removable constraining means 2 interposed between the main body 1 and the spacer means 3. In that way, whether it is in the form of a bracelet or a case, the main body can have associated with it spacer means of different shapes and sizes, promoting their interchangeability. Moreover, the spacer means 3 may be bent through 90° to keep the overall dimensions contained.

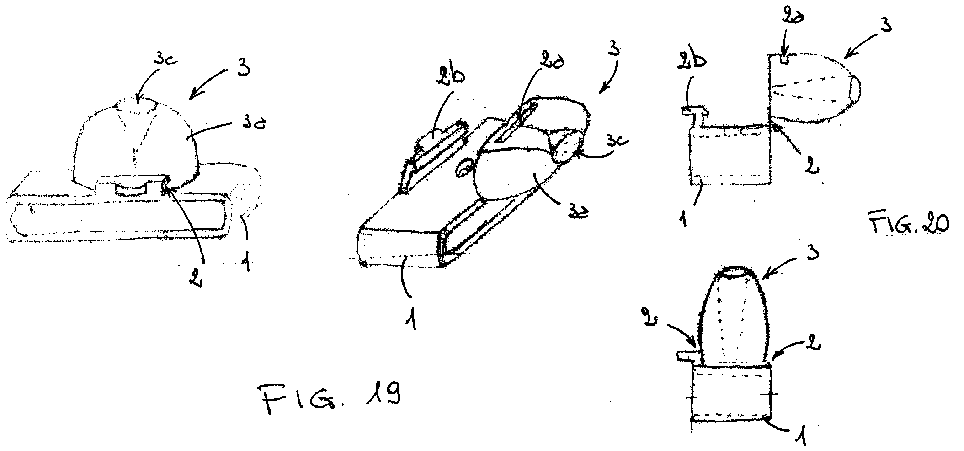

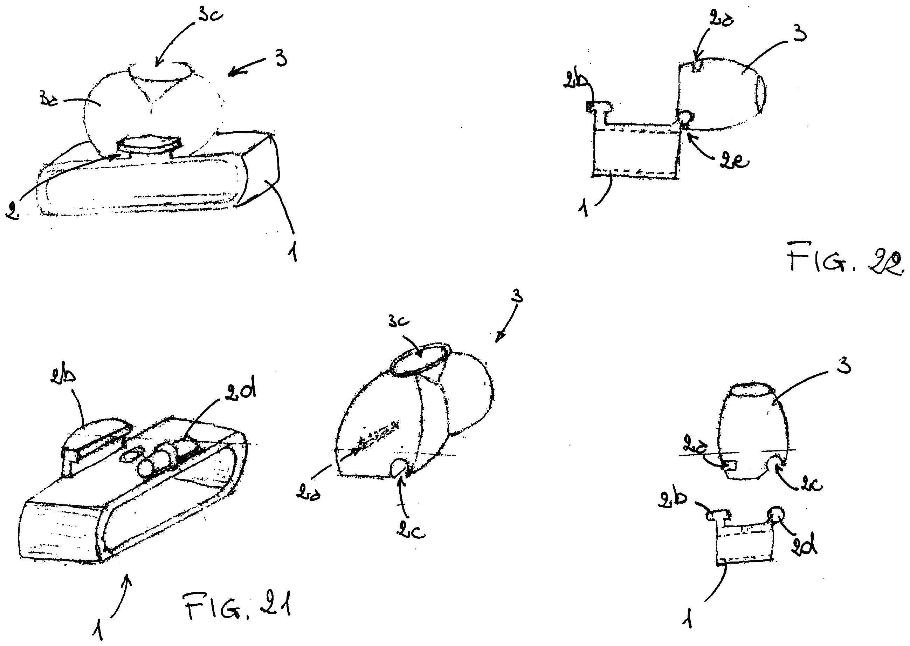

Figures 19, 20, 21 and 22 illustrate embodiments which separately have the two advantages described above. In fact, in Figures 19 and 20, the main body 1 and the spacer means 3 are made in a single body of a rubbery material which allows their rotation relative to one another, whilst the constraining means 2 comprise a recess 2a, made in the spacer means 3, and a corresponding tooth 2b, projecting from the main body 1 of the protective device 30. In contrast, in Figures 21 and 22 the main body 1 and the spacer means 3 are made separately to promote the interchangeability of the spacer means 3. In this case, the constraining means 2, in addition to the recess 2a and the tooth 2b, also comprise a sliding pin 2d on the main body 1 and a corresponding through seat 2c in the spacer means 3, which form a separable hinge 2e.

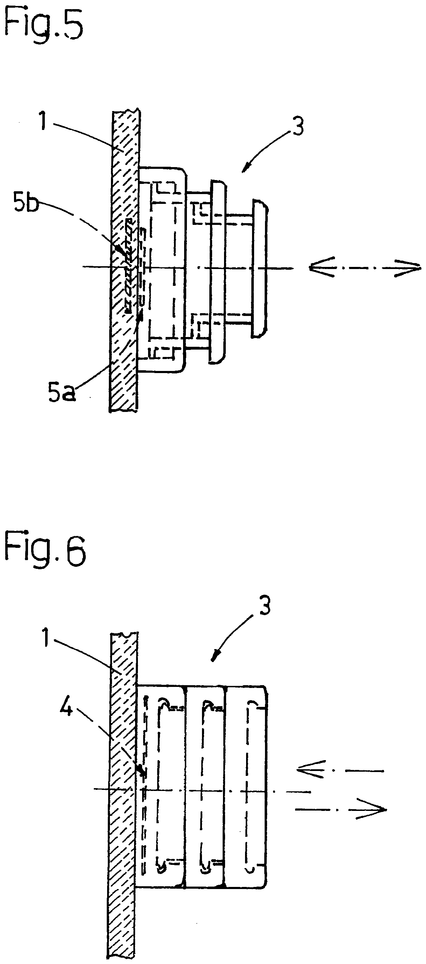

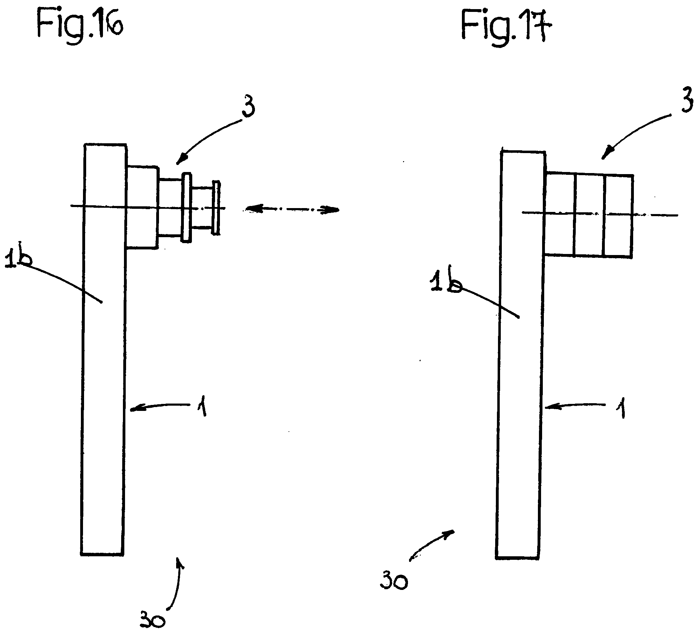

The spacer means 3 may comprise telescopic elements, as shown in Figures 5 and 16, so that they allow adjustment of the distance separating the equipment 10 from the user 20, thereby adapting the device to the particular needs of each user. Similar results may be achieved using spacer means 3 comprising stackable parts, as is schematically illustrated in Figures 6 and 17.

The spacer means 3 may also comprise shielding material, for example a lead plate 4, so as to increase protection for the user 20.

The spacer means 3 may be removably constrained to the main body 1 of the protective device 30, for example using magnets 5a and metal inserts 5b on the adhering parts, so as to meet the needs and satisfy the preferences of each user 10. Moreover, said spacer means 3 may come in different sizes, so that they can suit the different physical build of users 20 of the same equipment 10.

The protective device 30 comprises at least one through hole 11, in such a way as to allow sound through. The positioning of said hole 11, particularly if it is made to coincide with the loudspeaker or the microphone of the equipment 10, affects the positioning of the protective device 30 in the operating condition.

In a preferred alternative embodiment of the invention, the protective device 30 comprises at least one electric contact 12, suitable for allowing the equipment 10 to operate only when the protective device 30 is in the correct operating position.

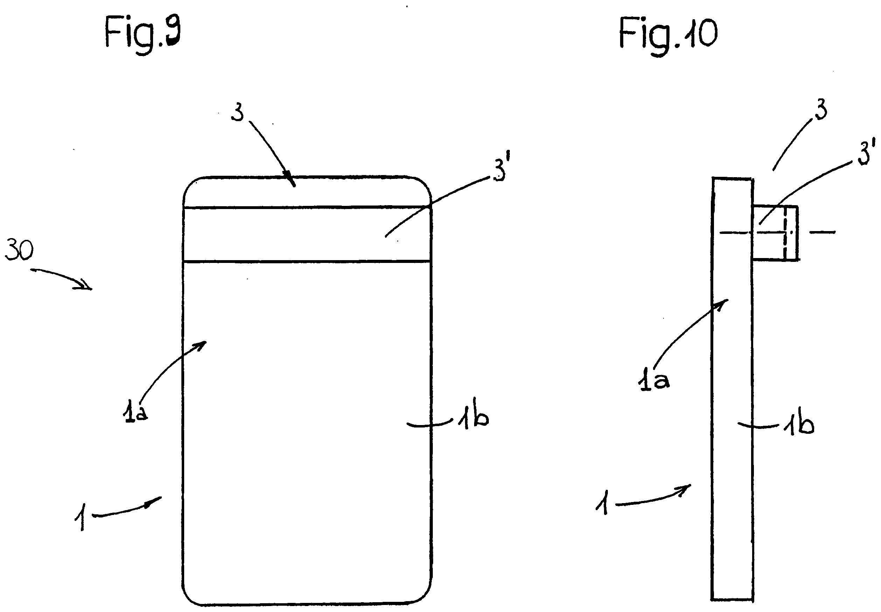

In the embodiment shown in Figures 9 and 10, which does not form part of the present invention, the spacer means 3 comprise an isolating arch 3', associated in a fixed position with the main body 1 of the protective device 30.

Moreover, in the embodiment shown in Figures 12 and 13, which does not form part of the present invention, the spacer means 3 are movable, comprising a bar 3d. From a home (non-operating) position in which it is within the dimensions of the main body 1, it can be moved to an operating position in which it projects from the main body 1, thereby keeping the user away from the equipment 10.

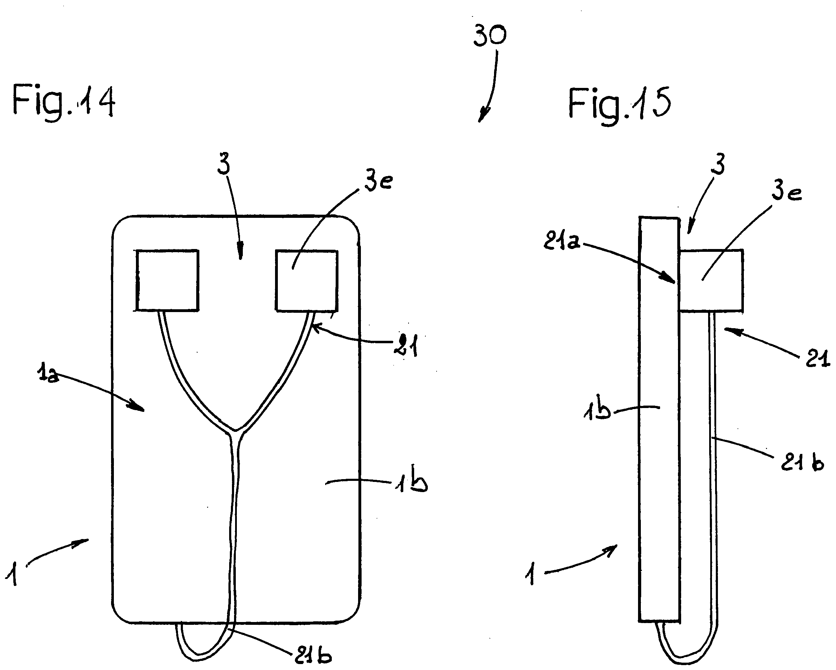

In a further embodiment, shown in Figures 14 and 15, the spacer means 3 comprise at least one protective element 3e, provided with means 21 for constraining it to the main body 1, in such a way as to be associable with the main body in various positions. Said constraining means 21 comprise fixing secondary parts 21a for fixing the element 3e to the main body 1, for use of the equipment 10, and flexible secondary parts 21b, constituted for example of cords which hold the protective element 3e constrained to the main body 1, even when the equipment 10 is not used.

## Claims

1. A protective device for equipment which emits electromagnetic waves, comprising a main body (1) and spacer means (3) fixed to the main body (1), designed to keep the equipment (10) away from parts of the body of a user (20) during use, the main body (1) comprising a closed surface (1a), designed to surround the equipment (10) in the operating condition and the spacer means (3) comprising at least one isolating projection (3a), designed to reduce the absorption of radiation and heat by the user (20), **characterised in that** an acoustic cone (3c) is provided in the central zone of said isolating projection (3a), said acoustic cone (3c) having the base towards the user (20) for amplifying the sounds received.

2. The protective device according to claim 1, **characterised in that** the spacer means (3) comprise at least a second isolating projection (3b), designed to reduce the absorption of radiation and heat by different parts of the body of the user (20).

3. The protective device according to claim 1 or 2, **characterised in that** the spacer means (3) comprise telescopic parts designed to allow adjustment of the distance separating the equipment (10) from the user (20).

4. The protective device according to claim 1 or 2, **characterised in that** the spacer means (3) comprise stackable parts designed to allow adjustment of the distance separating the equipment (10) from the user (20).

5. The protective device according to claim 1 or 2 or 3 or 4, **characterised in that** the spacer means (3) comprise a shielding material.

6. The protective device according to any one of the preceding claims, **characterised in that** it comprises removable constraining means (2), interposed between the main body (1) and the spacer means (3) and adapted to associate the main body (1) to the spacer means (3).

7. The protective device according to any one of the preceding claims, **characterised in that** the spacer means (3) are in different sizes.

8. The protective device according to any one of the preceding claims, **characterised in that** it comprises at least one electrical contact (12), designed to allow operation of the equipment (10) only when the protective device (30) is in the operating position.

9. The protective device according to any one of the preceding claims, **characterised in that** the closed surface (1a) comprises a plurality of faces (1b), designed to form a polyhedral case of the equipment (10).

10. The protective device according to any one of the preceding claims 1-8, **characterised in that** the closed surface (1a) comprises a single face (1c), designed to form a bracelet.

11. The protective device according to claim 9 or 10, **characterised in that** the spacer means (3) are constrained to at least one face (1b; 1c) of the main body (1).

12. The protective device according to any one of the preceding claims, **characterised in that** the spacer means (3) comprise at least one protective element (3e), provided with means (21) for constraining said protective element (3e) to the main body (1) and for associating said protective element (3e) with the main body (1) in various positions.

13. The protective device according to claim 12, **characterised in that** the constraining means (21) comprise fixing secondary parts (21a), for use of the equipment (10), and flexible secondary parts (21b), for the non-operating condition of the equipment (10).

14. The protective device according to claim 6, **characterised in that** the removable constraining means (2) comprise a recess (2a), made in the spacer means (3), and a corresponding tooth (2b), projecting from the main body (1), said main body (1) and said spacer means (3) being made in a single body.

15. The protective device according to claim 6, **characterised in that** the removable constraining means (2) comprise a recess (2a), made in the spacer means (3), and a corresponding tooth (2b), projecting from the main body (1), as well as a sliding pin (2d) on the main body (1) and a corresponding through seat (2c) in the spacer means (3), forming a separable hinge (2e).

## Patentansprüche

1. Eine Schutzvorrichtung für ein Gerät, das elektromagnetische Wellen ausstrahlt, umfassend einen Hauptkörper (1) und Abstandhaltermittel (3), die am Hauptkörper (1) befestigt sind, konzipiert, um das Gerät (10) während des Gebrauchs von Körperteilen eines Anwenders (20) entfernt zu halten, der Hauptkörper (1) umfasst dabei eine geschlossene Fläche (1a), konzipiert, um das Gerät (10) im Betriebszustand zu umschließen und die Abstandhaltermittel (3) umfassen dabei mindestens einen Isolierschutz (3a), konzipiert, um die Absorption von Strahlung und Hitze durch den Anwender (20) zu verringern, **gekennzeichnet dadurch, dass** im mittleren Bereich des besagten Isolierschutzes (3a) ein Akustikkegel (3c) gegeben ist, wobei die Basis des besagten Akustikkegels (3c) zum Anwender (20) gerichtet ist, um die empfangenen Töne zu verstärken.

2. Die Schutzvorrichtung nach Patentanspruch 1, **gekennzeichnet dadurch, dass** die Abstandhaltermittel (3) mindestens einen zweiten Isolierschutz (3b) umfassen, konzipiert, um die Absorption von Strahlung und Hitze durch verschiedene Körperteile des Anwenders (20) zu verringern.

3. Die Schutzvorrichtung nach den Patentansprüchen 1 oder 2, **gekennzeichnet dadurch, dass** die Abstandhaltermittel (3) Teleskopteile umfassen, konzipiert, um die Einstellung des Abstands, der das Gerät (10) vom Anwender (20) trennt, zu erlauben.

4. Die Schutzvorrichtung nach den Patentansprüchen 1 oder 2, **gekennzeichnet dadurch, dass** die Abstandhaltermittel (3) stapelbare Teile umfassen, konzipiert, um die Einstellung des Abstands, der das Gerät (10) vom Anwender (20) trennt, zu erlauben.

5. Die Schutzvorrichtung nach den Patentansprüchen 1 oder 2 oder 3 oder 4, **gekennzeichnet dadurch, dass** die Abstandhaltermittel (3) Abschirmmaterial enthalten.

6. Die Schutzvorrichtung nach jedem der vorherigen Patentansprüche, **gekennzeichnet dadurch, dass** sie abnehmbare Befestigungsmittel (2) umfasst, welche zwischen dem Hauptkörper (1) und den Abstandhaltermitteln (3) eingesetzt und angepasst sind, um den Hauptkörper (1) mit den Abstandhaltermitteln (3) zu verbinden.

7. Die Schutzvorrichtung nach jedem der vorherigen Patentansprüche, **gekennzeichnet dadurch, dass** die Abstandhaltermittel (3) verschiedene Größen haben.

8. Die Schutzvorrichtung nach jedem der vorherigen Patentansprüche, **gekennzeichnet dadurch, dass** sie mindestens einen elektrischen Kontakt (12) enthält, konzipiert, um den Betrieb des Geräts (10) nur zu erlauben, wenn die Schutzvorrichtung (30) in der Betriebsposition ist.

9. Die Schutzvorrichtung nach jedem der vorherigen Patentansprüche, **gekennzeichnet dadurch, dass** die geschlossene Fläche (1a) eine Mehrzahl von Seitenflächen (1b) beinhaltet, konzipiert, um ein vielflächiges Gehäuse für das Gerät (10) zu bilden.

10. Die Schutzvorrichtung nach jedem der vorherigen Patentansprüche 1 - 8, **gekennzeichnet dadurch, dass** die geschlossene Fläche (1a) eine einzelne Seitenfläche (1c) beinhaltet, konzipiert, um ein Armband zu bilden.

11. Die Schutzvorrichtung nach den Patentansprüchen 9 oder 10, **gekennzeichnet dadurch, dass** die Abstandhaltermittel (3) an mindestens einer Seitenfläche (1b; 1c) des Hauptkörpers (1) befestigt sind.

12. Die Schutzvorrichtung nach jedem der vorherigen Patentansprüche, **gekennzeichnet dadurch, dass** die Abstandhaltermittel (3) mindestens ein Schutzelement (3e) umfassen, das mit Mitteln (21) zur Befestigung des besagten Schutzelements (3e) am Hauptkörper (1) und zur Verbindung des besagten Schutzelements (3e) mit dem Hauptkörper (1) in verschiedenen Positionen ausgestattet ist.

13. Die Schutzvorrichtung nach Patentanspruch 12, **gekennzeichnet dadurch, dass** die Befestigungsmittel (21) befestigende Sekundärteile (21a) zur Verwendung des Geräts (10) und biegsame Sekundärteile (21b) für den Nichtbetriebszustand des Geräts (10) umfassen.

14. Die Schutzvorrichtung nach Patentanspruch 6, **gekennzeichnet dadurch, dass** die abnehmbaren Befestigungsmittel (2) eine in den Abstandhaltermitteln (3) eingefügte Aussparung (2b) und einen entsprechenden Zahn (2b), der aus dem Hauptkörper (1) herausragt, umfassen, besagter Hauptkörper (1) und besagte Abstandhaltermittel (3) bestehen dabei aus einem einzigen Körper.

15. Die Schutzvorrichtung nach Patentanspruch 6, **gekennzeichnet dadurch, dass** die abnehmbaren Befestigungsmittel (2) eine in den Abstandhaltermitteln (3) eingefügte Aussparung (2b) und einen entsprechenden Zahn (2b), der aus dem Hauptkörper (1) herausragt, sowie einen verschiebbaren Stift (2d) am Hauptkörper und einen entsprechenden durchgehenden Sitz (2c) in den Abstandhaltermitteln (3), die ein trennbares Scharnier (2e) bilden, umfassen.

## Revendications

1. Un dispositif de protection pour appareils émettant des ondes électromagnétiques, comprenant un corps principal (1) et des moyens d'espacement (3) fixés au corps principal (1), destinés à maintenir l'appareil (10) espacé de parties du corps d'un utilisateur (20) pendant l'utilisation, le corps principal (1) comprenant une surface fermée (1a), destinée à entourer l'appareil (10) dans la condition d'utilisation et les moyens d'espacement (3) comprenant au moins une protubérance isolante (3a), destinée à réduire l'absorption de radiations et de chaleur par l'utilisateur (20), **caractérisé en ce qu'**un cône acoustique (3c) est prévu dans la zone centrale de ladite protubérance isolante (3a), ledit cône acoustique (3c) ayant la base orientée vers l'utilisateur (20) pour amplifier les sons reçus.

2. Le dispositif de protection selon la revendication 1, **caractérisé en ce que** les moyens d'espacement (3) comprennent au moins une deuxième protubérance isolante (3b), destinée à réduire l'absorption de radiations et de chaleur par différentes parties du corps de l'utilisateur (20).

3. Le dispositif de protection selon la revendication 1 ou 2, **caractérisé en ce que** les moyens d'espacement (3) comprennent des parties télescopiques destinées à permettre le réglage de la distance séparant l'appareil (10) de l'utilisateur (20).

4. Le dispositif de protection selon la revendication 1 ou 2, **caractérisé en ce que** les moyens d'espacement (3) comprennent des parties empilables destinées à permettre le réglage de la distance séparant l'appareil (10) de l'utilisateur (20).

5. Le dispositif de protection selon la revendication 1 ou 2 ou 3 ou 4, **caractérisé en ce que** les moyens d'espacement (3) comprennent un matériel de protection.

6. Le dispositif de protection selon l'une quelconque des revendications précédentes, **caractérisé en ce qu'**il comprend des moyens d'assujettissement amovibles (2), interposés entre le corps principal (1) et les moyens d'espacement (3) et destinés à associer le corps principal (1) aux moyens d'espacement (3).

7. Le dispositif de protection selon l'une quelconque des revendications précédentes, **caractérisé en ce que** les moyens d'espacement (3) sont de dimensions différentes.

8. Le dispositif de protection selon l'une quelconque des revendications précédentes, **caractérisé en ce qu'**il comprend au moins un contact électrique (12), destiné à permettre le fonctionnement de l'appareil (10) uniquement quand le dispositif de protection (30) est dans la position d'utilisation.

9. Le dispositif de protection selon l'une quelconque des revendications précédentes, **caractérisé en ce que** la surface fermée (1a) comprend une pluralité de faces (1b), destinées à former un étui polyédrique de l'appareil (10).

10. Le dispositif de protection selon l'une quelconque des revendications 1-8 précédentes, **caractérisé en ce que** la surface fermée (1a) comprend une face unique (1c), destinée à former un bracelet.

11. Le dispositif de protection selon la revendication 9 ou 10, **caractérisé en ce que** les moyens d'espacement (3) sont assujettis à au moins une face (1b ; 1c) du corps principal (1).

12. Le dispositif de protection selon l'une quelconque des revendications précédentes, **caractérisé en ce que** les moyens d'espacement (3) comprennent au moins un élément de protection (3e), muni de moyens (21) destinés à assujettir ledit élément de protection (3e) au corps principal (1) et à associer ledit élément de protection (3e) au corps principal (1) dans différentes positions.

13. Le dispositif de protection selon la revendication 12, **caractérisé en ce que** les moyens d'assujettissement (21) comprennent des parties secondaires de fixation (21a), pour l'utilisation de l'appareil (10), et des parties secondaires flexibles (21b), pour la condition de non-utilisation de l'appareil (10).

14. Le dispositif de protection selon la revendication 6, **caractérisé en ce que** les moyens d'assujettissement amovibles (2) comprennent un évidement (2a), réalisé dans les moyens d'espacement (3), et une dent (2b) correspondante, dépassant du corps principal (1), ledit corps principal (1) et lesdits moyens d'espacement (3) étant réalisés en un corps unique.

15. Le dispositif de protection selon la revendication 6, **caractérisé en ce que** les moyens d'assujettissement amovibles (2) comprennent un évidement (2a), réalisé dans les moyens d'espacement (3), et une dent (2b) correspondante, dépassant du corps principal (1), ainsi qu'une goupille de coulissement (2d) sur le corps principal (1) et un logement traversant (2c) correspondant dans les moyens d'espacement (3), formant une charnière séparable (2e).
